# EUROPÄISCHE PATENTSCHRIFT

(11) **EP 2 285 608 B1**
(45) Veröffentlichungstag und Bekanntmachung des Hinweises auf die Patenterteilung: **04.09.2013**
(21) Anmeldenummer: 09765425.5
(22) Anmeldetag: 07.05.2009
(51) Int. Cl.: B60J 7/043

(54) **FAHRZEUGDACH MIT AUSSEN LAUFENDEM SCHIEBEDACH**
VEHICLE ROOF HAVING SUNROOF GUIDED ON THE OUTSIDE
TOIT DE VÉHICULE ÉQUIPÉ D UN TOIT OUVRANT COULISSANT VERS L EXTÉRIEUR

(30) Priorität: 18.06.2008 DE 102008028941
(43) Veröffentlichungstag der Anmeldung: 23.02.2011
(73) Patentinhaber: Webasto SE, 82131 Stockdorf (DE)
(72) Erfinder: HÖLZEL, Dominik, 82194 Gröbenzell (DE)
(74) Vertreter: advotec.
(86) Internationale Anmeldenummer: PCT/DE2009/000643
(87) Internationale Veröffentlichungsnummer: WO 2009/152789

(56) Entgegenhaltungen:
- DE-A1- 10 143 823
- DE-A1- 10 201 636
- DE-U1- 20 218 960

## Beschreibung

Die Erfindung betrifft ein Fahrzeugdach gemäß dem Oberbegriff des Patentanspruchs 1.

Ein derartiges Fahrzeugdach ist aus der Druckschrift DE 102 01 636 A1 bekannt und umfasst eine Dachöffnung, die mittels eines Deckelelements wahlweise geschlossen oder zumindest teilweise freigegeben werden kann. Das Deckelelement ist an seinem heckseitigen Rand gegenüber einem festen Dachabschnitt ausstellbar und oberhalb des festen Dachabschnitts in Fahrzeugheckrichtung verfahrbar. Das Deckelelement ist also ein außen laufender Schiebedachdeckel. Bezogen auf eine Fahrzeuglängsmittelebene ist das Deckelelement beidseits jeweils über eine bugseitige Gleiteinheit in einem vorderen Führungsschienenabschnitt und über eine heckseitige Gleiteinheit in einem heckseitigen Führungsschienenabschnitt geführt. Die heckseitige Gleiteinheit ist an einer Führungskulisse des Deckelelements geführt und die Tangenten des heckseitigen Führungsschienenabschnitts und die Führungskulisse des Deckelelements sind projiziert in Fahrzeughochrichtung zumindest teilweise gegenüber einer Fahrzeuglängsachse gegensinnig angestellt, so dass sich der heckseitige Führungsschienenabschnitt und die deckelfeste Führungskulisse in dieser Projektion in einer Freigabestellung des Deckelelements schneiden.

Aus der Druckschrift DE 101 43 823 C2 ist ein Fahrzeugdach bekannt, das ein Deckelelement umfasst, mittels dessen eine Dachöffnung wahlweise geschlossen oder zumindest teilweise freigegeben werden kann. Das Deckelelement ist als so genannter außen laufender Schiebedachdeckel ausgebildet, der an seinem heckseitigen Rand gegenüber einem heckseitigen, festen Dachabschnitt ausstellbar und oberhalb des festen Dachabschnitts in Heckrichtung verfahrbar ist. Zum Verfahren in Fahrzeuglängsrichtung ist das Deckelelement bezogen auf eine Fahrzeuglängsmittelebene beidseits jeweils über eine fahrzeugbugseitige Gleiteinheit in einem vorderen Führungsschienenabschnitt und über eine fahrzeugheckseitige Gleiteinheit in einem heckseitigen Führungsschienenabschnitt geführt. Die heckseitigen Führungsschienenabschnitte, deren Verlauf durch einen entsprechenden Schlitz an der der Fahrzeugaußenhaut erkennbar ist, verlaufen jeweils parallel zu einer seitlichen Kontur des Fahrzeugdaches. Zur Anpassung der Breite der Führungseinrichtung für das Deckelelement in Fahrzeugquerrichtung ist eine Steueranordnung vorgesehen, die Hebel umfasst, die sich über den Verfahrweg der heckseitigen Gleiteinheiten verschwenken. Eine derartige Steueranordnung ist zum einen mit einem zusätzlichen Bauraum und zum anderen mit zusätzlichem Gewicht verbunden. Auch resultieren durch den Einsatz der Steueranordnung zusätzliche Kosten.

Aus diesem Grunde wurde in der Praxis daher darauf verzichtet, den Verlauf der hecksseitigen Führungsschienenabschnitte von außen laufenden Schiebedächern an die seitlichen Konturen des Fahrzeugdachs anzupassen. Vielmehr sind heutige außen laufende Schiebedächer derart ausgelegt, dass die heckseitigen Führungsschienenabschnitte parallel zu Fahrzeuglängsachse, d. h. netzparallel angeordnet sind, was wiederum dazu führt, dass sich Blenden der Dachseitenholme in Richtung Fahrzeugheck verbreitern. Dies geht aber vielfach zu Lasten des Designs.

Der Erfindung liegt daher die Aufgabe zugrunde, ein gemäß der einleitend genannten Gattung ausgebildetes Fahrzeugdach zu schaffen, bei dem der Verlauf heckseitiger Führungsschienenabschnitte an die seitliche Dachkontur mit geringfügigem Bauraumaufwand zu niedrigen Kosten möglich ist.

Diese Aufgabe ist erfindungsgemäß durch das Fahrzeugdach mit den Merkmalen des Patentanspruchs 1 gelöst.

Erfindung gemäß wird ein Fahrzeugdach vorgeschlagen, bei dem die heckseitigen Gleiteinheiten jeweils an einer Deckelkulisse geführt sind und die Tangenten der jeweiligen heckseitigen Führungsschienenabschnitte und der jeweils zugeordneten Deckelkulisse projiziert in Fahrzeughochrichtung zumindest teilweise gegenüber einer Fahrzeuglängsachse gegensinnig angestellt sind, so dass sich der betreffende heckseitige Führungsschienenabschnitt und die zugeordnete Deckelkulisse in dieser Projektion in einer Freigabestellung des Deckelelements schneiden. Die bugseitige Gleiteinheit und die heckseitige Gleiteinheit sind mit separaten Antriebskabeln verbunden.

Der einer Seite des Fahrzeugdachs zugeordneten heckseitige, dachfeste Führungsschienenabschnitt und die zugeordnete Führungskulisse haben also eine derartige Anordnung, dass die heckseitige Gleiteinheit in einem Schnittpunkt dieser beiden liegt. Insbesondere sind der heckseitige Führungsschienenabschnitt und die zugeordnete Führungskulisse hierbei in Öffnungsstellung des Deckelelements windschief zueinander angeordnet, wobei sie sich in der Projektion in Fahrzeughochrichtung beim Öffnen des Deckelelements überstreichen und die Gleiteinheit neben der Bewegung in Fahrzeuglängsrichtung auch eine Bewegung in Fahrzeugquerrichtung ausführt.

Durch diese Auslegung eines Fahrzeugdachs ist es möglich, bei einem Deckelelement, das im Wesentlichen keine rechteckige Grundfläche hat, das heißt dessen Kanten nicht netzparallel verlaufen, sondern mit seinen seitlichen Rändern den Verlauf von Dachseitenholmen folgt und mithin einen so genannten Rail-to-Rail-Deckel darstellt, allein durch entsprechend angeordnete Deckelkulissen zur Führung der heckseitigen Gleiteinheiten ohne zusätzlichen Bauraumaufwand die heckseitigen Führungsschienenabschnitte an den Verlauf der seitlichen Dachränder anzupassen. Dies führt dazu, dass das Fahrzeugdach nach der Erfindung, welches mit einem außen laufenden Schiebedachdeckel versehen ist, höchsten optischen Ansprüchen genügen kann.

Eine zweckmäßige Ausbildung des erfindungsgemäß ausgebildeten Fahrzeugdachs besteht darin, dass die Verfahrgeschwindigkeit der heckseitigen Gleiteinheiten geringer ist als diejenige der bugseitigen Gleiteinheiten bzw. des Deckelelements. Die deckelfesten Kulissenbahnen bzw. Führungsschienen für die heckseitigen Gleiteinheiten bilden dann eine Art Wegausgleichseinrichtung, die den zusätzlichen, von den bugseitigen Gleiteinheiten zurückgelegten Verfahrweg aufnehmen können. Durch diese Ausgestaltung ist es auch möglich, die heckseitigen Führungsschienenabschnitte für die heckseitigen Gleiteinheiten kürzer auszuführen als die bugseitigen Führungsschienenabschnitte für die bugseitigen Gleiteinheiten, was wiederum zur Einsparung von Bauraum führt.

Bei einer bevorzugten Ausführungsform des Fahrzeugdachs nach der Erfindung, die für eine Vielzahl von Fahrzeugtypen hinsichtlich des Designs vorteilhaft ist, haben die Deckelkulissen und die heckseitigen Führungsschienen jeweils projiziert in Fahrzeughochrichtung einen gekrümmten Bahnverlauf, der vorzugsweise an den Verlauf der jeweiligen seitlichen Dachkontur angepasst ist.

Alternativ ist es auch denkbar, dass der heckseitige Führungsschienenabschnitt und die Deckelkulisse zumindest in der Projektion in Fahrzeughochrichtung einen zumindest annähernd geraden Verlauf haben. In diesem Falle hat der jeweils zugeordnete Kurvenverlauf des heckseitigen Führungsschienenabschnitts und der Deckelkulisse einen unendlichen Krümmungsradius, so dass die jeweiligen Tangenten mit dem Kurvenverlauf zusammenfallen. Der Begriff "Tangente" ist mithin in seinem weitesten Sinne zu verstehen.

Bei einer zweckmäßigen Ausführungsform des Fahrzeugdachs nach der Erfindung sind die bugseitigen Gleiteinheiten vorzugsweise jeweils mit einem ersten Antriebshebel und die heckseitigen Gleiteinheiten jeweils mit einem zweiten Antriebshebel verbunden. Der zweite Antriebs- bzw. Ausstellhebel der jeweiligen heckseitigen Gleiteinheit ist vorzugsweise über ein Gleitelement an dem heckseitigen Führungsschienenabschnitt und über einen Gleiter an der Deckelkulisse geführt.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel des Fahrzeugdachs nach der Erfindung ist in der Zeichnung schematisch vereinfacht dargestellt und wird in der nachfolgenden Beschreibung näher erläutert. Es zeigt:
- Fig. 1: eine perspektivische Ansicht eines Fahrzeugdachs nach der Erfindung mit einem ausgestellten Deckelelement;
- Fig. 2: eine Fig. 1 entsprechende Ansicht, jedoch mit in Heckrichtung verfahrenem Deckelelement;
- Fig. 3: eine schematische Draufsicht auf das Fahrzeugdach in Schließstellung des Deckelelements; und
- Fig. 4: eine Fig. 3 entsprechende Ansicht, jedoch in Öffnungsstellung des Deckelelements.

In der Zeichnung ist ein Fahrzeugdach 10 dargestellt, das mit eine Dachöffnungssystem versehen ist, welches ein Deckelelement 12 umfasst, mittels dessen eine Dachöffnung 14 wahlweise geschlossen oder zumindest teilweise freigegeben werden kann, das mithin zwischen einer Schließstellung und einer Freigabestellung verstellbar ist.

Das Deckelelement 12 stellt einen so genannten Rail-to-Rail-Deckel dar, dessen Abmessungen in Fahrzeugquerrichtung sich am heckseitigen und bugseitigen Rand unterscheiden und in Schließstellung Dachseitenholmen 20A bzw. 20B folgen. Die Breite des Deckelelements an dessen bugseitigen Rand ist mithin größer als an dessen heckseitigen Rand.

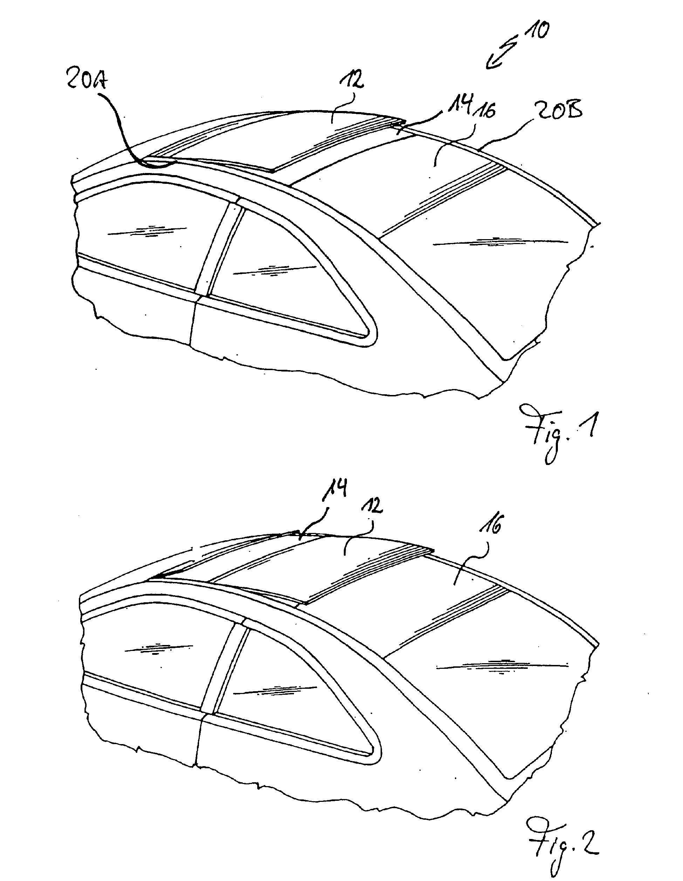

Ausgehend von der Schließstellung kann das Deckelelement 12 in die in Fig. 1 dargestellte, ausgestellte Lüfterstellung verschwenkt werden, in der der hintere Rand des Deckelelements 12 gegenüber dem heckseitigen festen Dachabschnitt 16 nach oben ausgestellt ist. Ausgehend von dieser Lüfterstellung kann das Deckelelement 12 bezogen auf eine Fahrzeuglängsmittelebene beidseits in einer Führungsanordnung 18 geführt ist, entsprechend der Darstellung in Fig. 2 über den festen Dachbereich 16 nach hinten in Richtung Fahrzeugheck verfahren werden. Das Deckelelement 12 stellt mithin ein außen laufendes Schiebedach dar.

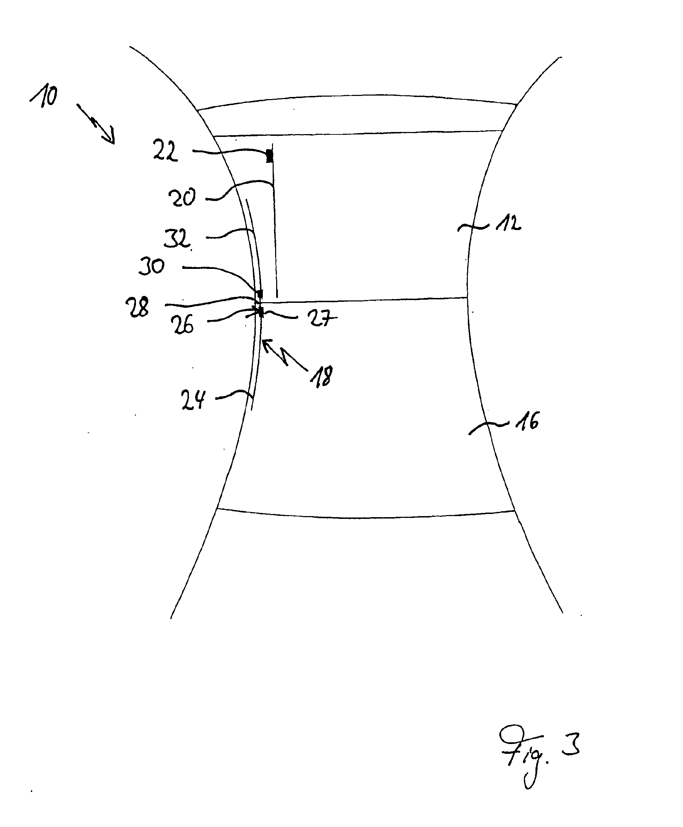

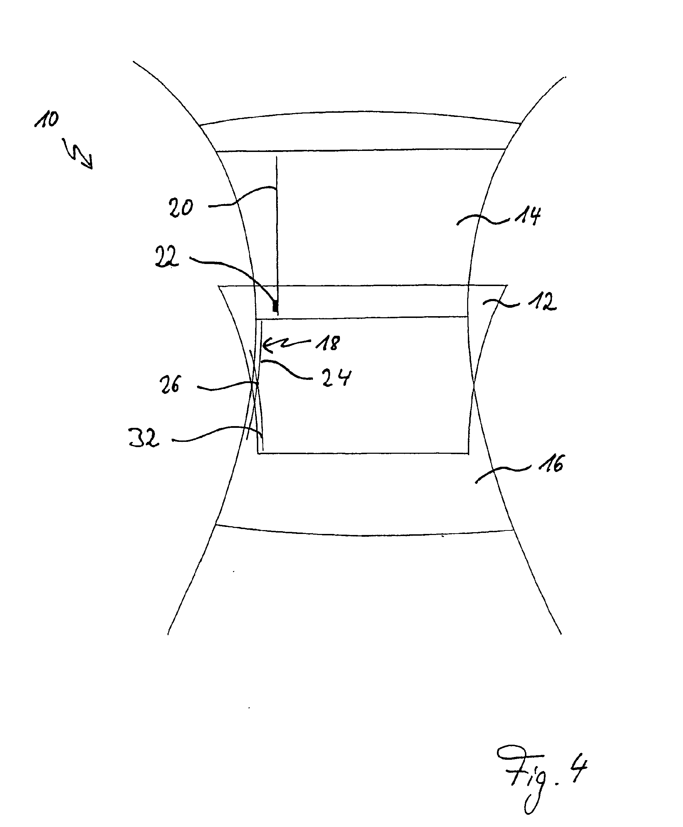

Wie insbesondere den Figuren 3 und 4 anhand des in Fahrtrichtung links angeordneten Dachbereichs zu entnehmen ist, weisen die Führungsanordnungen 18 jeweils einen vorderen, bugseitigen Führungsschienenabschnitt 20 für eine vordere Gleiteinheit 22 auf, der sich parallel zu einer Fahrzeuglängsrichtung erstreckt. Des Weiteren weisen die Führungsanordnungen 18 jeweils einen im Bereich des heckseitigen festen Dachabschnitts 16 angeordneten heckseitigen Führungsschienenabschnitt 24 auf, in dem mittels eines Gleitelements 27 eine heckseitige Gleiteinheit 26 geführt ist. An dem Gleitelement 27 ist ein heckseitiger Ausstell bzw. Antriebshebel 28 angelenkt, an dem ein Gleiter 30 ausgebildet ist, der an einer Führungskulisse 32 geführt ist, die an der Unterseite des Deckelelements 12 ausgebildet ist und mithin eine Führungsschiene für den betreffenden Gleiter 30 bildet.

Die bugseitigen, jeweils einen vorderen Schlitten bildenden Gleiteinheiten 22 und die heckseitigen, jeweils einen hinteren Schlitten bildenden Gleiteinheiten 26 sind jeweils mit einem Antriebskabel verbunden. Die Antriebskabel der Gleiteinheiten 22 und 26 werden von einer gemeinsamen Antriebseinheit mit unterschiedlichen Geschwindigkeiten angetrieben, und zwar derart, dass die Verfahrgeschwindigkeit der bugseitigen Gleiteinheiten 22 größer ist als diejenige der heckseitigen Gleiteinheiten 26.

Der heckseitige Führungsschienenabschnitt 24 hat projiziert in Fahrzeughochrichtung einen gekrümmten Bahnverlauf, der parallel zu der seitlichen Dachkontur ausgebildet ist, wobei die Krümmungsaußenseite der Fahrzeuglängsmittelebene zugewandt ist. Dadurch ist es möglich, die Dachseitenholme 20A und 20B über ihre gesamte Erstreckung in Fahrzeuglängsrichtung mit einer konstanten Breite auszubilden. Die Dachseitenholme 20A und 20B verlaufen hierbei an ihrem jeweiligen der Fahrzeuglängsmittelebene zugewandten inneren Rand im Bereich des festen heckseitigen Dachabschnitts 16 entlang dem betreffenden heckseitigen Führungsschienenabschnitt 24, der eine Trennfuge bzw. einen Dachschlitz definiert.

Die Führungskulissen 32, die deckelelementfest ausgebildet sind, haben jeweils ebenfalls einen gekrümmten Bahnverlauf, welcher im Wesentlichen der betreffenden seitlichen Kontur des Deckelelements 12 folgt und dessen Krümmungsaußenseite ebenfalls der Fahrzeuglängsmittelebene zugewandt ist.

Wie insbesondere Fig. 4 zu entnehmen ist, haben die Führungskulisse 32, die an dem Deckelelement 12 ausgebildet ist, und der heckseitige Führungsschienenabschnitt 24 einen derartigen Verlauf, dass deren Tangenten projiziert in Fahrzeughochrichtung gegenüber der Fahrzeuglängsachse gegensinnig angestellt sind, so dass sie sich in dieser Projektion in der in Fig. 4 dargestellten Freigabestellung des Deckelelements schneiden. Der projizierte Schnittpunkt zwischen dem heckseitigen Führungsschienenabschnitt 24 und der Führungskulisse 32 verschiebt sich mit dem Verfahrweg des Deckelelements 12 in Fahrzeuglängsrichtung und in Fahrzeugquerrichtung. Hierbei wandert beim Verfahren des Deckelelements 12 heckwärts in Öffnungsstellung die in diesem Schnittpunkt angeordnete Gleiteinheit 26, die das Gleitelement 27, den Ausstellhebel 28 und den Gleiter 30 umfasst, bezogen auf die Fahrzeuglängsmittelebene in Fahrzeugquerrichtung nach außen, d. h. in Richtung Fahrzeugaußenseite. Gleitzeitig mit dem Verfahren der Gleit- bzw. Ausstelleinheit 26 in dem heckseitigen Führungsschienenabschnitt 24 bewegt sich der Gleiter 30 entlang der Kulissenbahn 32 des Deckelelements 12.

Die Führungs- bzw. Kulissenbahn 32 ist also so ausgebildet, dass sich die einen hinteren Schlitten bildende Gleiteinheit 26 mit dem Gleitelement 27, dem Ausstellhebel 28 und dem Gleiter 30 beim Verfahren in Richtung Fahrzeugheck stets im Schnittpunkt zwischen dem heckseitigen Führungsschienenabschnitt 24 und der Kulissenbahn 32 befindet. Durch diese Auslegung der Kulissenbahn 32 kann sich die Gleiteinheit 26 in Richtung Fahrzeugaußenseite bewegen, ohne sich zu verwinden, zu verspannen oder zu verklemmen, zumal die Gleiteinheit 26 mit einem separaten Antriebskabel verbunden ist, welches erstere stets im projizierten Schnittpunkt zwischen der Kulissenbahn 32 und dem Führungsschienenabschnitt 24 nach hinten verschiebt. Zur Aufnahme der auf die Gleiteinheit 26 beim Verfahren wirkenden Kräfte kann die Gleiteinheit 26 gebogen, elastisch und/oder auch mit einem Kugelkopflager versehen sein.

Durch die erfindungsgemäße Ausbildung der Kulissenbahn 32 und des Führungsschienenabschnitts 24, der unterhalb des Dachschlitzes liegt, der in Öffnungsstellung des Deckelelements 12 von dem Ausstellhebel 28 schwertartig durchgriffen ist, kann der Ausgleich in Fahrzeugquerrichtung allein durch die Relativbewegung zwischen der Gleiteinheit 26 und dem Deckelelement 12 realisiert werden. Es ist mithin nur erforderlich, an der Unterseite des Deckelelements 12 die Kulissenbahnen 32 vorzusehen und die Kulissenbahnen 32 und die heckseitigen Führungsschienenabschnitte 24 gekrümmt bzw. gegensinnig bezüglich der Fahrzeuglängsachse angestellt auszubilden, und zwar derart, dass sie den seitlichen Rändern des Deckelelements 12 bzw. des heckseitigen festen Dachabschnitts 16 folgen.

### Bezugszeichenliste

- 10: Fahrzeugdach
- 12: Deckelelement
- 14: Dachöffnung
- 16: fester Dachabschnitt
- 18: Führungsanordnung
- 20: bugseitiger Führungsschienenabschnitt
- 22: bugseitige Gleiteinheit
- 24: heckseitiger Führungsschienenabschnitt
- 26: heckseitige Gleiteinheit
- 27: Gleitelement
- 28: hinterer Ausstellhebel
- 30: Gleiter
- 32: Führungskulisse

## Patentansprüche

1. Fahrzeugdach (10), umfassend eine Dachöffnung (14), die mittels eines Deckelelements (12) wahlweise geschlossen oder zumindest teilweise freigegeben werden kann, welches an seinem heckseitigen Rand gegenüber einem festen Dachabschnitt (16) ausstellbar und oberhalb des festen Dachabschnitts (16) in Fahrzeugheckrichtung verfahrbar ist und bezogen auf eine Fahrzeuglängsmittelebene beidseits jeweils über eine bugseitige Gleiteinheit (22) in einem vorderen Führungsschienenabschnitt (20) und über eine heckseitige Gleiteinheit (26) in einem heckseitigen Führungsschienenabschnitt (24) gerührt ist, wobei die heckseitige Gleiteinheit (26) an einer Führungskulisse (32) des Deckelelements (12) geführt ist und die Tangenten des heckseitigen Führungsschienenabschnitts (24) und der Führungskulisse (32) des Deckelelements (12) projiziert in Fahrzeughochrichtung zumindest teilweise gegenüber einer Fahrzeuglängsachse gegensinnig angestellt sind, so dass sich der heckseitige Führungsschienenabschnitt (24) und die deckelfeste Führungskulisse (32) in dieser Projektion in einer Freigabestellung des Deckelelements (12) schneiden, **dadurch gekennzeichnet, dass** die bugseitige Gleiteinheit (22) und die heckseitige Gleiteinheit (26) mit separaten Antriebskabeln verbunden sind.

2. Fahrzeugdach nach Anspruch 1, **dadurch gekennzeichnet, dass** die Führungskulisse (32) des Deckelelements (12) und der heckseitige Führungsschienenabschnitt (24) projiziert in Fahrzeughochrichtung jeweils einen gekrümmten Bahnverlauf haben.

3. Fahrzeugdach nach Anspruch 1 oder 2, **dadurch gekennzeichnet, dass** der heckseitige Führungsschienenabschnitt (24) parallel zur betreffenden seitlichen Dachkontur verläuft.

4. Fahrzeugdach nach einem der Ansprüche 1 bis 3, **dadurch gekennzeichnet, dass** der heckseitige Führungsschienenabschnitt (24) für die heckseitige Gleiteinheit (26) kürzer als der bugseitige Führungsschienenabschnitt (20) für die bugseitige Gleiteinheit (22) ausgebildet ist.

5. Fahrzeugdach nach einem der Ansprüche 1 bis 4, **dadurch gekennzeichnet, dass** die bugseitige Gleiteinheit (22) mit einem ersten Antriebshebel und die heckseitige Gleiteinheit (26) mit einem heckseitigen Antriebshebel (28) verbunden ist.

6. Fahrzeugdach nach Anspruch 5, **dadurch gekennzeichnet, dass** der heckseitige Antriebshebel (28) der heckseitigen Gleiteinheit (26) an der Führungskulisse (32) des Deckelelements (12) geführt ist.

7. Fahrzeugdach nach Anspruch 1, **dadurch gekennzeichnet, dass** die Antriebsgeschwindigkeit der heckseitigen Gleiteinheit (26) geringer ist als diejenige der bugseitigen Gleiteinheit (22).

## Claims

1. Vehicle roof (10) comprising a roof opening (14), which can be either closed or at least partially exposed by means of a cover element (12), which at its rear edge can be tilted relative to a fixed roof section (16) and which is traversable above the fixed roof section (16) towards the rear of the vehicle and which is guided on both sides relative to a vehicle longitudinal center plane by a front sliding unit (22) in a leading guide rail section (20) and by a rear sliding unit (26) in a rear guide rail section (24) respectively, wherein the rear sliding unit (26) is guided on a guide link (32) of the cover element (12) and the tangents of the rear guide rail section (24) and of the guide link (32) of the cover element (12), projected in the vehicle vertical direction, are at least in part set counter to a vehicle longitudinal axis, so that the rear guide rail section (24) and the guide link (32) fixed to the cover in this projection intersect when the cover element (12) is in an open position, **characterized in that** the front sliding unit (22) and the rear sliding unit (26) are connected to separate drive cables.

2. Vehicle roof according to Claim 1, **characterized in that** the guide link (32) of the cover element (12) and the rear guide rail section (24), projected in the vehicle vertical direction, each have a curved track profile.

3. Vehicle roof according to Claim 1 or 2, **characterized in that** the rear guide rail section (24) runs parallel to the relevant lateral roof contour.

4. Vehicle roof according to one of Claims 1 to 3, **characterized in that** the rear guide rail section (24) for the rear sliding unit (26) is of shorter design than the front guide rail section (20) for the front sliding unit (22).

5. Vehicle roof according to one of Claims 1 to 4, **characterized in that** the front sliding unit (22) is connected to a first drive lever and the rear sliding unit (26) is connected to a rear drive lever (28).

6. Vehicle roof according to Claim 5, **characterized in that** the rear drive lever (28) of the rear sliding unit (26) is guided on the guide link (32) of the cover element (12).

7. Vehicle roof according to Claim 1, **characterized in that** the drive speed of the rear sliding unit (26) is less than that of the front sliding unit (22).

## Revendications

1. Toit de véhicule (10), comprenant une ouverture de toit (14) qui peut être fermée ou au moins partiellement ouverte au choix au moyen d'un élément de couvercle (12), qui peut être sorti au niveau de son bord arrière par rapport à une portion de toit fixe (16) et qui peut être déplacé au-dessus de la portion de toit fixe (16) dans la direction arrière du véhicule et qui est guidé, par rapport à un plan médian longitudinal du véhicule, à chaque fois de chaque côté par le biais d'une unité de glissement avant (22) dans une portion de rail de guidage avant (20) et par le biais d'une unité de glissement arrière (26) dans une portion de rail de guidage arrière (24), l'unité de glissement arrière (26) étant guidée sur une coulisse de guidage (32) de l'élément de couvercle (12) et les tangentes de la portion de rail de guidage arrière (24) et de la coulisse de guidage (32) de l'élément de couvercle (12), projetées dans la direction verticale du véhicule, étant inclinées en sens opposé au moins en partie par rapport à un axe longitudinal du véhicule, de telle sorte que la portion de rail de guidage arrière (24) et la coulisse de guidage fixée au couvercle (32) se coupent dans cette projection dans une position de libération de l'élément de couvercle (12), **caractérisé en ce que** l'unité de glissement avant (22) et l'unité de glissement arrière (26) sont connectées par des câbles d'entraînement séparés.

2. Toit de véhicule selon la revendication 1, **caractérisé en ce que** la coulisse de guidage (32) de l'élément de couvercle (12) et la portion de rail de guidage arrière (24), projetées dans la direction verticale du véhicule, ont une allure de trajectoire respective courbe.

3. Toit de véhicule selon la revendication 1 ou 2, **caractérisé en ce que** la portion de rail de guidage arrière (24) s'étend parallèlement au contour de toit latéral concerné.

4. Toit de véhicule selon l'une quelconque des revendications 1 à 3, **caractérisé en ce que** la portion de rail de guidage arrière (24) pour l'unité de glissement arrière (26) est plus courte que la portion de rail de guidage avant (20) pour l'unité de glissement avant (22).

5. Toit de véhicule selon l'une quelconque des revendications 1 à 4, **caractérisé en ce que** l'unité de glissement avant (22) est connectée à un premier levier d'entraînement et l'unité de glissement arrière (26) est connectée à un levier d'entraînement arrière (28).

6. Toit de véhicule selon la revendication 5, **caractérisé en ce que** le levier d'entraînement arrière (28) de l'unité de glissement arrière (26) est guidé sur la coulisse de guidage (32) de l'élément de couvercle (12).

7. Toit de véhicule selon la revendication 1, **caractérisé en ce que** la vitesse d'entraînement de l'unité de glissement arrière (26) est inférieure à celle de l'unité de glissement avant (22).
